(19) Europäisches Patentamt / European Patent Office / Office européen des brevets

(11) EP 2 430 093 B1

(12) # EUROPÄISCHE PATENTSCHRIFT

(45) Veröffentlichungstag und Bekanntmachung des Hinweises auf die Patenterteilung:
**26.07.2017 Patentblatt 2017/30**

(21) Anmeldenummer: **10721449.6**

(22) Anmeldetag: **12.05.2010**

(51) Int Cl.:
***C08L 23/02*** (2006.01) ***C04B 2/00*** (2006.01)
***C08F 2/00*** (2006.01) ***C08L 51/00*** (2006.01)

(86) Internationale Anmeldenummer:
**PCT/EP2010/056539**

(87) Internationale Veröffentlichungsnummer:
**WO 2010/130780 (18.11.2010 Gazette 2010/46)**

(54) **WÄSSRIGE POLYMERDISPERSIONEN**
AQUEOUS POLYMER DISPERSIONS
DISPERSIONS AQUEUSES DE POLYMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **15.05.2009 EP 09160369**

(43) Veröffentlichungstag der Anmeldung:
**21.03.2012 Patentblatt 2012/12**

(73) Patentinhaber: **Sika Technology AG**
**6340 Baar (CH)**

(72) Erfinder:
- **BÜRGE, Christian M.**
  **CH-5503 Schafisheim (CH)**
- **PETER, André**
  **CH-8307 Effretikon (CH)**
- **WOMBACHER, Franz**
  **CH-8916 Jonen (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A1- 1 138 697** **EP-A1- 2 006 258**
**US-A1- 2002 007 019**

EP 2 430 093 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die vorliegende Erfindung betrifft das Gebiet der wässrigen Polymerdispersionen sowie deren Einsatz mit hydraulischen und latent hydraulischen Bindemitteln, und damit insbesondere das Gebiet der Zement- und Betontechnologie.

### Stand der Technik

Der Einsatz von Polymerdispersionen zur Veredelung von zementösen Bindemittel ist bereits seit längerem bekannt. Der Zusatz von handelsüblichen wässrigen Polymerdispersionen führt aber zum Nachteil, dass sie vor allem sehr hoch dosiert werden müssen, um die Porosität und die Wasseraufnahme stark abzusenken und um die Haftzugfestigkeiten auf einem glatten Untergrund zu steigern.

EP 0 222 932A2 beschreibt die Verwendung einer wässrige Polymerdispersion mit grossen Mengen an amorphem Siliziumdioxid, zur Verringerung der Porosität von zementösen Baustoffen. Als optionaler Bestandteile dieser wässrigen Polymerdispersion werden sulfonierte Amino-s-triazinharze, Sulfaminsäure-Melamin-Harze und Naphthalinsulfonsäure-Formaldehyd-Kondensate als Verflüssiger offenbart. Sulfonierte Amino-s-triazinharze, Sulfaminsäure-Melamin-Harze und Naphthalinsulfonsäure-Formaldehyd-Kondensate sind bekannte Betonverflüssiger. Es hat sich jedoch als besonders nachteilig erwiesen, dass die Kombination von Polymerdispersionen mit diesen Betonverflüssigern grundsätzlich grosse Probleme bei der Verarbeitbarkeit aufweisen, bzw. in äusserst hohen Dosierungen verwendet werden müssen.

US 2002/007019 und EP 2 006 258 offenbaren weitere Polymerdispersion enthaltend Copolymere und Kammcopolymer aus verschiedenen Monomeren.

### Darstellung der Erfindung

Aufgabe der vorliegenden Erfindung ist es daher, wässrige Polymerdispersionen zur Verfügung zu stellen, welche auch bei geringer Einsatzmenge eine gute Verarbeitung einer hydraulisch bzw. latent hydraulischen Zusammensetzung ermöglichen und trotzdem eine starke Erhöhung der mechanischen Eigenschaften, Reduktion der Porosität und der Wasserabsorption des ausgehärteten Baustoffs gewährleisten.

Es hat sich überraschenderweise gezeigt, dass diese Aufgabe durch eine wässrige Polymerdispersion gemäss Anspruch 1 gelöst werden kann.

Die darin enthaltenen Kammpolymere mit über Ester- oder Ethergruppen an die Hauptkette angebunden Seitenketten stellen einen wesentlichen Bestandteil der wässrigen Polymerdispersion dar und spielen eine zentrale Rolle für die vorliegende Erfindung.

Es hat sich gezeigt, dass durch den Zusatz von derartigen wässrigen Polymerdispersionen zu hydraulischen und latent hydraulischen Bindemitteln deren mechanische Eigenschaften äusserst effizient erhöht und deren Porosität sowie Wasserabsorption reduziert wird. Als wesentlicher Vorteil hierbei ist jedoch, dass eine bedeutend geringere Menge als bekannte wässrige Polymerdispersionen verwendet werden können, um eine gute Verarbeitung und Verbesserung der mechanischen Eigenschaften und Porosität bzw. Wasserabsorption zu erreichen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die vorliegende Erfindung eine wässrige Polymerdispersion, gemäß Ansprüche 1 bis 10 welche enthält:

a) mindestens ein dispergiertes Copolymer **CP,** welches aufgebaut ist aus mindestens zwei Monomeren, welche ausgewählt sind aus der Gruppe bestehend aus Ethylen, Propylen, Butylen, Isopren, Butadien, Styrol, Acrylonitril, Acrylsäure, Methacrylsäure, Acrylsäurealkylester, Methacrylsäurealkylester, Vinylester und Vinylchlorid; und weiterhin
b) mindestens ein Kammpolymer **KP** mit über Ester- oder Ethergruppen an die Hauptkette angebundenen Seitenketten; sowie
c) Wasser

Unter einer "Polymerdispersion" wird im vorliegenden Dokument eine Dispersion von Polymerpartikeln in einer

wässrigen Phase verstanden. Eine Dispersion ist insbesondere über längere Zeit, d.h. typischerweise bei Raumtemperatur mindestens eine Woche, stabil, ohne dass Ausfällungen entstehen.

Ein Kammpolymer besteht aus einer linearen Polymerkette (=Hauptkette), an welcher über Ester- oder Ethergruppen Seitenketten angebunden sind. Die Seitenketten bilden hierbei bildlich gesprochen die "Zähne" eines "Kamms".

Die fett markierten Bezeichnungen wie **CP, KP, DHM, VR, PEV, K1, K2** oder dergleichen dienen im vorliegenden Dokument lediglich für das bessere Leseverständnis und Identifizierung.

Die Polymerdispersion enthält mindestens ein dispergiertes Copolymer **CP.** Dieses Polymer lässt sich durch radikalische Polymerisation der beteiligten Monomere polymerisieren. Die Polymerisation erfolgt hierbei vorzugsweise durch Emulsionspolymerisation oder Suspensionspolymerisation direkt aus den Monomeren, welche ausgewählt sind aus der Gruppe bestehend aus Ethylen, Propylen, Butylen, Isopren, Butadien, Styrol, Acrylonitril, Acrylsäure, Methacrylsäure, Acrylsäurealkylester, Methacrylsäurealkylester, Vinylester und Vinylchlorid. Bevorzugt sind die dispergierten Copolymere **CP** aus zwei oder drei, besonders bevorzugt aus zwei, verschiedenen Monomeren hergestellt.

Die Abfolge der von den Monomeren stammenden Strukturen im gebildeten Copolymer kann hierbei alternierend, blockartig oder zufällig angeordnet sein.

Die Monomere weisen vorzugsweise weniger als 13, insbesondere weniger als 9, C-Atome auf. Als Acrylsäurealkylester und Methacrylsäurealkylester sind insbesondere Butyl(meth)acrylat, Hexyl(meth)acrylat und 2-Ethylhexyl(meth)acrylat geeignet. Als Vinylester sind insbesondere Vinylacetat sowie die Vinylester von verzweigten Fettsäuren, insbesondere 2,2-Dimethylbuttersäure, 2,2-Dimethylvaleriansäure, 2,2-Dimethylbuttersäure, Neodecansäure, insbesondere, wie sie von Shell bzw. Hexion, unter dem Handelsnamen Versatic™, insbesondere Versatic™ 10, vertrieben werden. Derartige Vinylester von verzweigten Fettsäuren werden insbesondere als VeoVa™ Monomere, bevorzugt VeoVa™ Monomer 9 and VeoVa™ Monomer 10, von Hexion kommerziell vertrieben.

Insbesondere geeignete Polymere sind Butadien/Styrol-Copolymere, Acrylsäure/Styrol-Copolymere, Methacrylsäure/Styrol-Copolymere, Ethylen/ Vinylacetat-Copolymere, Vinylacetat/(Meth)acrylsäurealkylester-Copolymere, und Styrol/(Meth)acrylsäurealkylester-Copolymere .

Meist bevorzugt als dispergiertes Copolymer **CP** sind Butadien/StyrolCopolymere.

Die Grösse der Polymerpartikel ist hierbei vorzugsweise zwischen 50 Nanometer und 50 Mikrometer, vorzugsweise zwischen 500 Nanometer und 30 Mikrometer. Aufgrund der Partikelgrösse ist die Polymerdispersion mehr oder weniger trüb und weist natürlicherweise typischerweise eine weisse milchartige Färbung auf. Selbstverständlich kann aber je nach Wunsch die Farbe durch Zusatz von Farbstoffen beliebig eingestellt werden.

Der Gehalt an dispergiertes Copolymer **CP** ist vorzugsweise 10 - 60 Gew.-%, insbesondere 25 - 45 Gew.-%, bezogen auf das Gewicht der wässrigen Polymerdispersion.

Weiterhin enthält die Polymerdispersion mindestens ein Kammpolymer **KP** mit über Ester- oder Ethergruppen an die Hauptkette angebunden Seitenketten.

Als Kammpolymer **KP** geeignet sind einerseits Kammpolymere mit über Ethergruppen an das lineare Polymergerüst gebundenen Seitenketten.

Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben offenbart sind. Die Vinylether oder Allylether weisen insbesondere die Formel (II) auf.

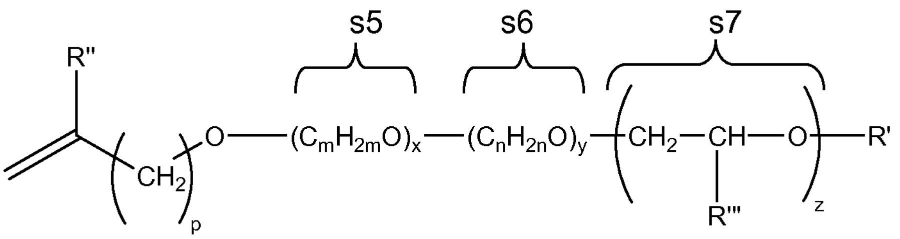

(II)

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder ein, gegebenenfalls substituierter, Arylrest mit 6 bis 14 C-Atomen. R" steht für H oder für eine Methylgruppe und R'" steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig angeordnet sein.

Insbesondere sind derartige Kammpolymere Copolymerisate von Vinylether oder Allylether mit Maleinsäureanhydrid, Maleinsäure, und/oder (Meth)acrylsäure.

Als Kammpolymer **KP** geeignet sind andererseits Kammpolymere mit über Estergruppen an das lineare Polymergerüst gebundenen Seitenketten. Diese Art von Kammpolymeren **KP** ist gegenüber den Kammpolymeren mit über Ethergruppen an das lineare Polymergerüst gebundenen Seitenketten bevorzugt.

Besonders bevorzugte Kammpolymere **KP** sind Copolymere der Formel (I).

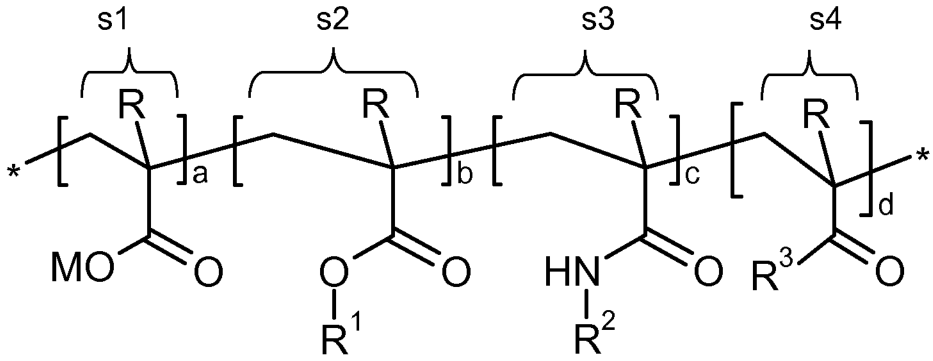

(I)

Hierbei stehen M unabhängig voneinander für $H^+$, Alkalimetallion, Erdalkalimetallion, zwei- oder dreiwertiges Metallion, Ammoniumion, oder organische Ammoniumgruppe. Der Term "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass für M in diesem Falle $H^+$ und $Na^+$ unabhängig voneinander bedeuten.

Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe.

Des Weiteren stehen die Substituenten $R^1$ unabhängig voneinander für $-[AO]_q-R^4$. Die Substituenten $R^2$ stehen unabhängig voneinander für eine $C_1$- bis $C_{20}$-Alkylgruppe, -Cycloalkylgruppe, -Alkylarylgruppe oder für $-[AO]_q-R^4$. Der Substituent A steht in beiden Fälle unabhängig voneinander für eine $C_2$- bis $C_4$-Alkylengruppe und $R^4$ für eine $C_1$- bis $C_{20}$-Alkylgruppe, -Cyclohexylgruppe oder -Alkylarylgruppe, während q einen Wert von 2 bis 250, insbesondere von 8 bis 200, besonders bevorzugt von 11 bis 150, darstellt.

Des Weiteren stehen die Substituenten $R^3$ unabhängig voneinander für $-NH_2$, $-NR^5R^6$, $-OR^7NR^8R^9$. Hierbei stehen $R^5$ und $R^6$ unabhängig voneinander für eine $C_1$- bis $C_{20}$-Alkylgruppe, -Cycloalkylgruppe oder -Alkylarylgruppe oder -Arylgruppe oder für eine Hydroxyalkylgruppe oder für eine Acetoxyethyl-($CH_3$-CO-O-$CH_2$-$CH_2$-) oder eine Hydroxy-isopropyl- (HO-CH($CH_3$)-$CH_2$-) oder eine Acetoxyisopropylgruppe ($CH_3$-CO-O-CH($CH_3$)-$CH_2$-); oder $R^5$ und $R^6$ bilden zusammen einen Ring, von dem der Stickstoff ein Teil ist, um einen Morpholin- oder Imidazolinring aufzubauen.

Weiterhin stehen die Substituenten $R^8$ und $R^9$ je unabhängig voneinander für eine $C_1$- bis $C_{20}$-Alkylgruppe, -Cycloalkylgruppe, -Alkylarygruppe, -Arylgruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von

$$a/b/c/d = (0.1 – 0.9) / (0.1 – 0.9) / (0 – 0.8) / (0 – 0.3),$$

$$\text{insbesondere} \quad a/b/c/d = (0.1 – 0.9) / (0.1 – 0.9) / (0 – 0.5) / (0 – 0.1),$$

$$\text{bevorzugt} \quad a/b/c/d = (0.1 – 0.9) / (0.1 – 0.9) / (0 – 0.3) / (0 – 0.06),$$

zueinander, mit der Massgabe, dass a + b + c + d = 1 ist. Die Summe c + d ist bevorzugt grösser als 0.

Die Herstellung des Kammpolymeren **KP** der Formel (I) kann einerseits durch radikalische Polymerisation der entsprechenden Monomere der Formel ($III_a$), ($III_b$), ($III_c$) bzw. ($III_d$), welche dann zu den Strukturelementen Struktureinheiten s1, s2, s3 und s4 führen,

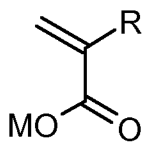 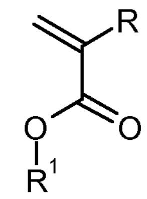 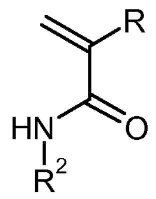 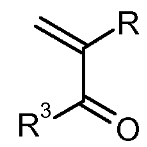

(IIIa) (IIIb) (IIIc) (IIId)

oder andererseits durch eine sogenannte polymer-analoge Umsetzung einer Polycarbonsäure der Formel (IV) erfolgen

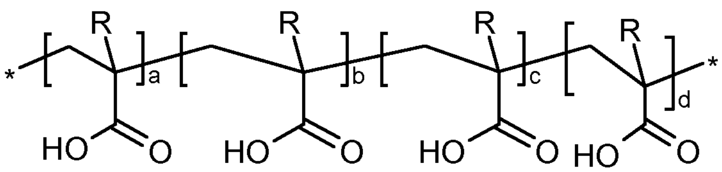 (IV).

In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Kammpolymer **KP** der Formel (I) in festem Aggregatszustand hergestellt werden. Die Offenbarung dieser gerade genannten Patentschriften wird hiermit insbesondere durch Bezugnahme eingeschlossen.

Es hat sich erwiesen, dass eine besonders bevorzugte Ausführungsform der Kammpolymere **KP** der Formel (I) diejenigen sind, in welchen c+d > 0, insbesondere d > 0, sind. Als Rest $R^3$ hat sich insbesondere $-NH-CH_2-CH_2-OH$ als besonderes vorteilhaft erwiesen.

Als besonders vorteilhaft erwiesen haben sich Kammpolymere **KP,** wie sie von Sika Schweiz AG unter der Handelsnamenreihe ViscoCrete® kommerziell vertrieben werden.

Der Gehalt an Kammpolymer **KP** ist vorzugsweise 1 - 20 Gew.-%, insbesondere 5 - 15 Gew.-%, bezogen auf das Gewicht der wässrigen Polymerdispersion.

Weiterhin enthält die wässrige Polymerdispersion Wasser. Der Gehalt an Wasser ist vorzugsweise 20 - 80 Gew.-%, insbesondere 30 - 70 Gew.-%, bezogen auf das Gewicht der wässrigen Polymerdispersion.

Die Herstellung wässrigen Polymerdispersion erfolgt typischerweise durch Zugabe des Kammpolymeren **KP** zu einer bereits vorgängig erzeugten Dispersion des Copolymer **CP** in Wasser. Die Zugabe erfolgt typischerweise unter intensivem Rühren. Es kann zuweilen hilfreich sein, dass Kammpolymere **KP** vor dem Mischen in Wasser gelöst, emulgiert oder dispergiert werden.

Für das Herstellen der Dispersion ist die Verwendung von hochtourigen Mischern, insbesondere von Dissolvern oder Ystral-Mischern (Ystral GmbH, Deutschland), empfehlenswert.

Es hat sich gezeigt, dass es vorteilhaft ist, wenn die wässrige Polymerdispersion weiterhin

d) mindestens ein Dispergierhilfsmittel **DHM,** vorzugsweise Poly(meth)-acrylsäure,

enthält.

Dispergierhilfsmittel sind an und für sich bekannte Hilfsmittel, welche für das Erstellen einer Dispersion hilfreich sind. Derartige Dispergierhilfsmittel **DHM** weisen insbesondere Oberflächenaktive Gruppierungen auf. Insbesondere Tenside, wie alkoxylierte Phenole, um Beispiel alkoxyliertes Isononylphenol oder alkoxyliertes Nonylphenol sind geeignete Dispergierhilfsmittel.

Als besonders geeignetes Dispergierhilfsmittel **DHM** hat sich Poly(meth)acrylsäure, bevorzugt Polyacrylsäure, erwiesen.

Es hat sich gezeigt, dass durch den Einsatz von Poly(meth)acrylsäure vor allem die Lagerstabilität der wässrigen Dispersion verbessert werden kann.

Der Gehalt an Dispergierhilfsmittel **DHM** beträgt vorzugsweise 3 Gewichts-% oder weniger, vorteilhaft 0.1 - 3

Gew.-%, bezogen auf das Gewicht der wässrigen Polymerdispersion.

Die wässrige Polymerdispersion enthält vorteilhaft weiterhin mindestens einen Viskositätsregler.

Es hat sich als besonders vorteilhaft gezeigt, wenn die wässrige Polymerdispersion

e) mindestens einen einwertigen oder mehrwertigen Alkohol oder einen Glykolether oder ein Harnstoff oder Amid der Formel (V) als Viskositätsregler **VR** enthält.

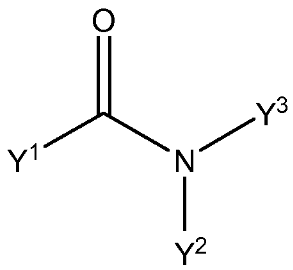 (V)

Hierbei steht $Y^1$ für $NH_2$ oder für eine verzweigte oder unverzweigte Alkylgruppe mit 1 bis 6 C-Atomen; oder $Y^1$ steht zusammen mit $Y^2$ für einen zweiwertigen Rest, welcher zusammen mit der Amidgruppe einen 5- bis 8-gliedrigen Ring bildet.

$Y^2$ steht für H oder für eine verzweigte oder unverzweigte Alkylgruppe mit 1 bis 6 C-Atomen, insbesondere für eine Methylgruppe; oder $Y^2$ steht zusammen mit $Y^1$ für einen zweiwertigen Rest, welcher zusammen mit der Amidgruppe einen 5- bis 8-gliedrigen Ring bildet.

$Y^3$ steht für H oder für eine verzweigte oder unverzweigte Alkylgruppe mit 1 bis 6 C-Atomen, insbesondere für eine Methylgruppe.

Insbesondere geeignet sind die Viskositätsregler **VR** Polyethylenglykoldimethylether oder N-Methylpyrrolidon.

Die Viskositätsregler **VR** haben primär einen Verdünnungseffekt auf die wässrige Dispersion. Es ist aber auch durchaus möglich, dass Viskositätsregler verwendet werden, welche eine verdickende Wirkung, aufweisen, so dass beispielsweise eine Gel-artige Konsistenz erreicht wird, welche für die Dosierung der wässrigen Dispersion vorteilhaft sein kann.

Der Gehalt an Viskositätsregler **VR** ist vorzugsweise 15 Gewichts-% oder weniger, vorteilhaft 1 - 10 Gew.-%, bezogen auf das Gewicht der wässrigen Polymerdispersion.

Der Zusatz von Dispergierhilfsmittel **DHM,** insbesondere Poly(meth)-acrylsäure, und/oder Viskositätsregler **VR,** wirkt sich auf die Stabilität, insbesondere die Lagerstabilität, der wässrigen Polymerdispersion sehr vorteilhaft aus.

Es hat sich weiterhin als besonders vorteilhaft erwiesen, wenn die wässrige Polymerdispersion sauer, insbesondere mit einem pH zwischen 5 und 7, ist.

Es hat sich als vorteilhaft erwiesen, wenn die wässrige Polymerdispersion weiterhin

g) mindestens ein pyrogenes oder kolloidales Siliziumdioxid enthält.

Pyrogenes Siliziumdioxid wird auf dem Fachmann bekannte Art und Weise hergestellt. Durch den Verbrennungsprozess, insbesondere durch Flammenhydrolyse, werden hierbei aus Silanen, äussert feine $SiO_2$-Partikel erzeugt. Derartige pyrogene Siliziumdioxide werden beispielsweise von Evonik, früher Degussa, unter dem Handelsnamen Aerosil® oder von Cabot Corp. unter dem Namen Cab-O-Sil® vertrieben.

Weiterhin wird als pyrogenes Siliziumdioxid sogenanntes Silica Fume bezeichnet, welches Nebenprodukt bei der Herstellung von elementarem Silizium und Siliziumlegierungen anfällt.

Besonders vorteilhaft weist das pyrogene Siliziumdioxid eine spezifische Oberfläche (BET) gemäss Brunauer-Emmet-Teller von 10 - 400 $m^2$/ g, vorzugweise von 150 - 250 $m^2$/ g auf.

Kolloidales Siliziumdioxid (*colloidal silica*) sind feinteilige amorphe, nicht-poröse und typischerweise kugelige Siliziumdioxid-Partikel, welche in Wasser als Suspension vorhanden sind. Kolloidales Siliziumdioxid wird üblicherweise über einen Mehrstufenprozess hergestellt, bei welchem eine Alkalisilikat-Lösung teilweise neutralisiert wird. Als bevorzugtes kolloidales Siliziumdioxid gilt sogenanntes Silica-Sol.

Das kolloidale Siliziumdioxid weist vorteilhaft eine Teilchengrösse von 0.1 bis 100 nm, insbesondere von 10 bis 20 nm, auf. Das kolloidale Siliciumdioxid kann einerseits eine monodisperse Suspension sein. Andererseits kann es vorteilhaft sein, wenn das kolloidale Siliciumdioxid eine eine polydisperse Suspension bildet.

Der Zusatz von pyrogenem oder kolloidalem Siliziumdioxid bewirkt insbesondere eine Steigerung der Chemikalienbeständigkeit der aus der wässrigen Polymerdispersion und einem zementösen Bindemittel gebildeten Produkte, da durch das so zugesetzte Siliziumdioxid der freie Kalk des Zementes gebunden wird und die Alkali-Silikat-Reaktion

verhindert wird.

Der Gehalt an pyrogenem oder kolloidalem Siliziumdioxid ist vorzugsweise 50 Gewichts-% oder weniger, insbesondere 10 - 30 Gew.-%, bezogen auf das Gewicht der wässrigen Polymerdispersion.

Es hat sich zudem als vorteilhaft erwiesen, wenn die wässrige Polymerdispersion weiterhin

h) mindestens eine Phosphoratom-enthaltende Verbindung **PEV** enthält, welche vorzugsweise ein Orthophosphorsäure, Pyrophosphorsäure, Polyphosphorsäure oder ein sauer reagierendes Salz der Orthophosphorsäure, Pyrophosphorsäure oder Polyphosphorsäure ist.

Der Gehalt an Phosphoratom-enthaltenden Verbindung **PEV** ist vorzugsweise 30 Gewichts-% oder weniger, insbesondere 2 - 10 Gew.-%, bezogen auf das Gewicht der wässrigen Polymerdispersion.

Es hat sich zudem als vorteilhaft erwiesen, wenn die wässrige Polymerdispersion weiterhin

i) mindestens eine Polyhydroxylverbindung oder ein Phosphat enthält.

Der Gehalt an Polyhydroxylverbindung oder ein Phosphat ist vorzugsweise 15 Gewichts-% oder weniger, insbesondere 2 - 10 Gew.-%, bezogen auf das Gewicht der wässrigen Polymerdispersion.

Es hat sich zudem als vorteilhaft erwiesen, wenn die wässrige Polymerdispersion weiterhin

j) mindestens ein Calciumsulfat oder amorphes Aluminiumhydroxid enthält.

Der Gehalt an Calciumsulfat oder amorphem Aluminiumhydroxid ist vorzugsweise 15 Gewichts-% oder weniger, insbesondere 3 - 10 Gew.-%, bezogen auf das Gewicht der wässrigen Polymerdispersion.

Die wässrige Polymerdispersion kann auch weitere für wässrige Dispersionen übliche Bestandteile aufweisen, wie beispielsweise Biozide, insbesondere Fungizide und/oder Algizide.

Als besonders vorteilhaft erwiesen haben sich wässrige Polymerdispersionen, welche die folgenden Bestandteile enthalten oder daraus bestehen:

10 - 60 Gew.-%, insbesondere 25 - 45 Gew.-%, dispergiertes Copolymer **CP;**
1 - 20 Gew.-%, insbesondere 5 - 15 Gew.-%, Kammpolymer **KP;**
20 - 80 Gew.-%, insbesondere 30 - 70 Gew.-%, Wasser;
0 - 5 Gew.-%, insbesondere 0.1 - 3 Gew.-%, Dispergierhilfsmittel **DHM,** vorzugsweise Poly(meth)acrylsäure;
0 - 15 Gew.-%, insbesondere 1 - 10 Gew.-%, Viskositätsregler **VR;**
0 - 50 Gew.-%, insbesondere 10 - 30 Gew.-%, pyrogenes oder kolloidales Siliziumdioxid;
0 - 30 Gew.-%, insbesondere 2 - 10 Gew.-%, Phosphoratom-enthaltende Verbindung **PEV;**
0 - 15 Gew.-%, insbesondere 3 - 10 Gew.-%, Calciumsulfat oder amorphes Aluminiumhydroxid.

Die Gewichts-%-Angaben beziehen sich hierbei auf das Gewicht der wässrigen Polymerdispersion.

Die Herstellung der wässrigen Polymerdispersion erfolgt vorzugsweise in der Art und Weise, dass das Kammpolymer **KP** in Wasser eingerührt wird, dann die allenfalls vorhandenen Dispergierhilfsmittel **DHM** und Viskositätsregler **VR** eingerührt werden. Anschliessend wird dann das in Wasser dispergierte Copolymer **CP** eingerührt, gefolgt vom allenfalls vorhandenen pyrogenen oder kolloidalen Siliziumdioxid. Falls Phosphoratom-enthaltende Verbindungen **PEV** und / oder **amorphes** Aluminiumhydroxid oder Calciumsulfat Bestandteile der wässrigen Polymerdispersion sind, können diese zu einem beliebigen Zeitpunkt im Herstellprozess eingerührt werden. Das Einrühren der Bestandteile folgt vorzugsweise unter hochtourigem Rühren mittels eines geeigneten Mischers, beispielsweise eines Dissolvers oder ein Mischer der Firma Ystral GmbH, Deutschland.

Es ist darauf zu achten, dass die wässrige Polymerdispersion nicht bei Temperaturen von unter 0°C gelagert wird, da durch das Gefrieren der Dispersion beim Wiederauftauen die Dispersion zerstört wird, indem das dispergierte Polymer aus fällt und nicht selbständig wieder redispergiert. Es ist weiterhin vorteilhaft, wenn die Lagerung der wässrigen Polymerdispersion bei nicht zu hohen Temperaturen erfolgt, da dies der Stabilität der wässrige Polymerdispersion ebenfalls abträglich ist.

Diese vorgängig beschriebenen wässrigen Polymerdispersionen lassen sich breit verwenden. Insbesondere können sie in Kombination mit einem anorganischen Bindemittel verwendet werden.

Besonders vorteilhaft werden diese vorgängig beschriebenen wässrigen Polymerdispersionen als Zusatzmittel für ein Haftschlämme oder einen Mörtel oder einen Beton verwendet.

In einem weiteren Aspekt betrifft die vorliegenden Erfindung eine mehrkomponentige Zusammensetzung, gemäß Ansprüche 11 und 12 welche aus mindestens einer ersten Komponente **K1** und einer zweiten Komponente **K2** besteht. Hierbei enthält die erste Komponente **K1** eine wässrige Polymerdispersion, wie sie vorgängig im Detail beschrieben wurde. Weiterhin enthält die zweite Komponente **K2** ein hydraulisches oder latent hydraulisches Bindemittel.

Ein hydraulisches Bindemittel ist gemäss üblicher Definition ein anorganisches Bindemittel, welches unter dem Einfluss von Wasser sowohl an Luft als auch unter Wasser erhärtet.

Latent hydraulische Bindemittel sind gemäss üblicher Definition anorganische Bindemittel, welches unter dem Einfluss von Wasser lediglich durch Anreger erhärten.

Das hydraulische oder latent hydraulische Bindemittel ist insbesondere ein Zement oder ein Mischzement. Als Mischzement gilt insbesondere eine Mischung eines Zements mit Flugasche oder mit Schlacke oder mit Puzzolan. Vorzugsweise ist der Zement ein Portlandzement, Weisszement oder Tonerdeschmelzzement. Es versteht sich von selbst, dass auch Mischungen von verschiedenen Zementen und/oder von Mischzementen verwendet werden können. Meist bevorzugt ist das hydraulische oder latent hydraulische Bindemittel Portlandzement.

Als weitere Bestandteile kann die mehrkomponentige Zusammensetzung, insbesondere als Bestandteil der zweiten Komponente **K2,** noch weitere Bestandteile aufweisen. Insbesondere handelt es sich bei diesen Bestandteilen um Zuschlagstoffe, Beschleuniger, Verzögerer, Schwindreduzierer, Entschäumer, organische Lösungsmittel und Betonverflüssiger.

Als Zuschlagstoffe sind natürliche kalkhaltige oder silikatische Sande, Kies, Quarz, Basalt, Siliciumcarbid, Aluminiumoxid, Borkarbid, Eisen, Eisenkarbid, Blähton, Blähschiefer, Perlit, Vermiculit, geschäumte Kunststoffe, Glasmicrospheres, Polymermicrospheres, geblähte Flugasche besonders geeignet.

Als Betonverflüssiger sind neben Polycarboxylaten insbesondere auch Ligninsulfonate, Naphtalin-Sulfonsäure-Formaldehyd-Kondensate, sulfonierte Melamin-Formaldehyd-Kondensate, Amino-s-triazinharze, Sulfaminsäure-Melamin-Harze und Naphthalinsulfonsäure-Formaldehyd-Kondensate oder Polycarboxylatether geeignet. Als Betonverflüssiger bevorzugt sind jedoch Polycarboxylate.

Diese zusätzlichen Stoffe können Bestandteile der zweiten Komponente **K2** oder von weiteren Komponenten darstellen, beispielsweise einer dritten Komponente **K3** und/oder einer vierten Komponente **K4** darstellen. Letzteres ist insbesondere dann der Fall, wenn die mehrkomponentige Zusammensetzung Bestandteile enthält, welche mit der ersten Komponente **K1** und/oder der zweiten Komponente **K2** mehr oder weniger reaktiv sind und welche insbesondere erst bei der Aushärtung der mehrkomponentigen Zusammensetzung reagieren sollten oder welche die Stabilität der wässrigen Dispersion negativ beeinflussen können. Durch Verlagerung dieser Bestandteile in die dritten Komponente **K3,** gegebenenfalls in eine weitere Komponente, können Probleme der Lagerstabilität besonders effizient gelöst werden. Allerdings können bei mehrkomponentige Zusammensetzungen mit drei oder mehr Komponenten vermehrt Probleme mit der Mischgüte der einzelnen Komponenten auftreten, so dass eine derartige Zusammensetzung vermehrt fehleranfällig ist und aufgrund der Notwendigkeit des Mischens der Vielzahl von Komponenten vom Anwender zunehmend als anwendungsunfreundlich und/oder kompliziert erachtet wird und Nachteile in Bezug auf Lagerhaltung und Logistik aufweist.

Insbesondere aus diesen Gründen ist es bevorzugt, dass die mehrkomponentige Zusammensetzung eine zweikomponentige Zusammensetzung ist, welche aus den erwähnten ersten Komponente **K1** und der zweiten Komponente **K2** besteht.

Bei der Anwendung werden die zwei Komponenten **K1** und **K2** und allenfalls weitere Komponenten miteinander gemischt, wodurch eine Aushärtung der beschriebenen mehrkomponentigen Zusammensetzung ausgelöst wird. Diese Aushärtung basiert insbesondere auf der Reaktion des hydraulischen oder latent hydraulischen Bindemittels mit Wasser.

Somit ist eine ausgehärtete Zusammensetzung, gemäß Anspruch 13, welche nach dem Mischen einer vorgängig beschriebenen mehrkomponentigen Zusammensetzung erhalten wurde, ein weiterer Gegenstand der vorliegenden Erfindung.

Aufgrund der Tatsache, dass die vorgängig beschriebenen wässrigen Polymerdispersionen, insbesondere in der Form der mehrkomponentigen Zusammensetzungen, besonderes vorteilhaft im Gebiet des Tiefbaues oder Hochbaues verwendet werden, stellt ein Bauwerk des Tiefbaues oder Hochbaues, gemäß Anspruch 14, welches eine ausgehärtete Zusammensetzung, wie sie vorgängig beschreiben wurde, einen weiteren Aspekt der vorliegenden Erfindung dar.

Bei der Verwendung gemäß Anspruch 15 der wässrigen Polymerdispersion zusammen mit hydraulischen und latent hydraulischen Bindemittel hat sich gezeigt, dass die erfindungsgemässen wässrigen Polymerdispersionen im Vergleich zu nicht erfindungsgemässen wässrigen Polymerdispersionen, welche anstelle des Kammpolymers **KP** andere Betonverflüssiger, insbesondere sulfonierte Amino-s-triazinharze, Sulfaminsäure-Melamin-Harze oder Naphthalinsulfonsäure-Formaldehyd-Kondensate enthalten, bei gleichem Wasser/Zement-Verhältnis und gleicher Konzentration, eine markante verbesserte Verarbeitung aufweisen.

Überraschenderweise hat sich gezeigt, dass die vorgängig beschriebenen erfindungsgemässen wässrigen Polymerdispersion gegenüber entsprechenden nicht erfindungsgemässen Polymerdispersionen in Kombination mit einem hydraulischen oder latent hydraulischen Bindemittel eine bedeutend verstärkte Erhöhung der mechanischen Festigkeiten, insbesondere von Haftzugfestigkeiten gemäss Norm EN 1542, Biegezugfestigkeit und Druckfestigkeit nach Norm EN 196-1 (Prismen 4x4x16 cm), sowie stark verringerte Wasserabsorption, charakterisiert durch den Wasserabsorptions-Koeffizient nach Norm DIN 52617 aufweisen.

Dies ermöglicht es einerseits Baumaterialien mit stark verbesserten Eigenschaften zu erhalten oder andererseits die Menge der einzusetzenden Polymerdispersion sehr stark zu reduzieren.

Es hat sich gezeigt, dass bei den wässrigen Polymerdispersionen, welche der vorliegenden Erfindung entsprechen, eine Reduktion bis zu 30 Gew.-%, insbesondere bis zu 33%, zuweilen gar bis zu 40 Gew.-%, verglichen mit den entsprechenden nicht erfindungsgemässen Polymerdispersionen möglich ist, ohne dass die mechanischen Eigenschaften und Wasserabsorption verschlechtert werden. Diese Einsparungen sind natürlich insbesondere in finanzieller Hinsicht besonders vorteilhaft.

Weiterhin hat sich gezeigt, dass diese Steigerung der mechanischen Eigenschaften, bzw. Verringerung der Wasserabsorption, bei gleicher Menge der erfindungsgemässen Polymerdispersionen verglichen mit nicht erfindungsgemässen Polymerdispersionen insbesondere am Anfang des Aushärtungsprozessen äusserst stark ausgeprägt ist.

Die Porosität, bzw. das Wasserabsorptionsverhalten, des ausgehärteten Baustoffs ist entscheidend für die Festigkeit, die Dauerhaftigkeit, die Dichtigkeit, die Haftfestigkeit, den Verschleisswiderstand und viele andere Gebrauchseigenschaften. Dabei steht die Porosität in einem umgekehrten Verhältnis zur Qualität und Dauerhaftigkeit, d.h. je tiefer die Porosität desto höher die Qualität, resp. die Dauerhaftigkeit.

Durch das über den Zusatz der erfindungsgemässen wässrigen Polymerdispersionen ereichte Ausmass der Reduktion der Porosität, bzw. der Wasserabsorption, werden Baustoffe erhalten, welche im Wesentlichen als wasserdicht bezeichnet werden können. Es lässt sich somit beispielsweise die Porosität nach Norm EN 480-11 einer Zementmatrix um bis zu 85% zu verringern.

Weiterhin werden derartig hohe Haftzugfestigkeiten erreicht, die es ermöglichen auf glatten Oberflächen Beschichtungen so zu verankern, dass sie beim Zugversuch nicht in der Haftschicht reissen.

Es hat sich zudem gezeigt, dass sich derartige Baustoffe auch durch eine extrem hohe Sulfatbeständigkeit (gemessen nach Methode angelehnt an Norm ASTM C-1012-95) auszeichnen.

## Beispiele

Herstellung Polymerdispersionen

Die Polymerdispersion SIKALATEX®, kommerziell erhältlich von Sika France S.A., ist eine Styrol/Butadien-Dispersion mit einem Polymergehalt von 46 Gew.-%. Diese Vergleichs-Polymerdispersion wird im Folgenden als ***Ref.Disp.*** bezeichnet.

Es wurden 9 Gewichtsteile einer 19.44%-igen wässrigen Lösung von Sika® ViscoCrete®-125 (Kammpolymer mit über Estergruppen gebundenen Poly(oxyalklyen)-Alkylether-Seitenketten, entsprechend Formel (I)) sowie 0.05 Gewichtsteile eines Entschäumers (Polyoxyalkylen-Alkylether-Fettsäureester) zu 100 Gewichtsteilen SIKALATEX® unter intensivem Rühren mittels eines Mischers der Firma Ystral GmbH, Deutschland, hinzugegeben. Diese Polymerdispersion wird im Folgenden als ***Disp.1*** bezeichnet.

Zu Vergleichszwecken wurden die Vergleichsdispersionen ***Ref.Disp.1, Ref.Disp2*** und ***Ref.Disp.3*** hergestellt, welche der Polymerdispersion ***Disp.1*** entsprechen, bei welcher die Menge Sika® ViscoCrete®-125 durch die entsprechende Menge Sikament® FF-86 (Sika Österreich GmbH, Sulfonsäure-Melamin-Formaldehyd-Kondensat enthaltend), Sikament® 210 (Sika Schweiz AG, Naphthalinsulfonsäure-Formaldehyd-Kondensat enthaltend) bzw. Natrium-Ligninsulfonat ersetzt so wurde, dass dieselbe Menge an Sulfonsäure-Melamin-Formaldehyd-Kondensat, Naphthalinsulfonsäure-Formaldehyd-Kondensat bzw. Natrium-Ligninsulfonat in der jeweiligen Dispersion, wie an Kammpolymer des Sika® ViscoCrete®-125 in ***Disp.1*** vorlag.

Bei den Vergleichsdispersionen ***Ref.Disp.1-2, Ref.Disp2-2*** und ***Ref.Disp.3-2*** wurde noch mehr Sikament® FF-86, Sikament® 210 bzw Natriumligninsulfonat hinzugefügt, so dass die doppelte Menge an Sulfonsäure-Melamin-Formaldehyd-Kondensat, Naphthalinsulfonsäure-Formaldehyd-Kondensat bzw. Natrium-Ligninsulfonat, in der jeweiligen Dispersion, wie an Kammpolymer des Sika® ViscoCrete®-125 in ***Disp.1*** vorlag.

Herstellung Mörtelzusammensetzungen

Es wurden Mörtelzusammensetzungen gemäss den in Tabelle 1 und Tabelle 2 angegeben Gewichtsteilen aus Portlandzement, Sand (0 - 3 mm), Wasser sowie allenfalls Polymerdispersionen oder Kammpolymer durch intensives Vermischen in einem Hobart-Mischer hergestellt. Die Menge zusätzliches Wasser ist so berechnet, dass alle Zusammensetzungen ein Wasser/Zement-Verhältnis von 0.40 aufweisen.

Tabelle 1. Mörtelzusammensetzungen.

| | ***Ref.1*** | ***Ref.2*** | ***Ref.3*** | ***1*** | ***2*** |
|---|---|---|---|---|---|
| Portlandzement | 100 | 100 | 100 | 100 | 100 |
| Sand | 300 | 300 | 300 | 300 | 300 |
| ***Ref.Disp.*** | | 15.7 | | | |
| ***Disp.1*** | | | | 15.7 | 10.4 |
| Sika® ViscoCrete®-125 | | | 0.17 | | |
| Wasser | 40 | 31.6 | 40 | 31.2 | 34.2 |

Tabelle 2. Mörtelzusammensetzungen mit erfindungsgemässen und nicht-erfindungsgemässen Polymerdispersionen.

| | **2** | ***Ref.4*** | ***Ref.5*** | ***Ref.6*** | ***Ref.4'*** | ***Ref.5'*** | ***Ref. 6'*** |
|---|---|---|---|---|---|---|---|
| Portlandzement | 100 | 100 | 100 | 100 | 100 | 100 | 100 |
| Sand | 300 | 300 | 300 | 300 | 300 | 300 | 300 |
| ***Disp.1*** | 10.4 | | | | | | |
| ***Ref.Disp.1*** | | 10.4 | | | | | |
| ***Ref.Disp.2*** | | | 10.4 | | | | |
| ***Ref.Disp.3*** | | | | 10.4 | | | |
| ***Ref.Disp.1-2*** | | | | | 10.4 | | |
| ***Ref.Disp.2-2*** | | | | | | 10.4 | |
| ***Ref.Disp.3-2*** | | | | | | | 10.4 |
| Wasser | 34.2 | 34.2 | 34.2 | 34.2 | 34.2 | 34.2 | 34.2 |

Es wurden die Haftzugfestigkeiten gemäss Norm EN 1542 nach 14, 28 und 56 Tagen, die Biegezugfestigkeit und Druckfestigkeit gemäss Norm EN 196-1 (Prismen 4x4x16 cm) nach 1 Tag, 7 und 28 Tagen sowie der Wasserabsorptions-Koeffizient gemäss Norm DIN 52617 nach 28 Tagen gemessen und in Tabelle 3 dargestellt. Weiterhin wurde jeweils in Tabelle 3 die prozentuale Änderung des Wertes von Beispiel ***1*** bzw. ***2*** zum jeweiligen Wert des Vergleichsbeispieles ***Ref.2*** mit "$\Delta_{Ref.2}$" angegeben.

Tabelle 3. Eigenschaften der Mörtelzusammensetzungen.

| | ***Ref.1*** | ***Ref.2*** | ***Ref.3*** | ***1*** | ***2*** |
|---|---|---|---|---|---|
| Haftzugfestigkeit | | | | | |
| nach 14 d [N/mm$^2$] | 2.8 | 4.3 | 3.0 | 6.6 | 4.7 |
| $\Delta_{Ref.2}$ | | | *-30%* | *+53%* | *+9%* |
| nach 28 d [N/mm$^2$] | 2.9 | 4.6 | 3.1 | 6.7 | 4.8 |
| $\Delta_{Ref.2}$ | | | -33% | +46% | *+4%* |
| nach 56 d [N/mm$^2$] | 2.9 | 4.9 | 3.1 | 6.7 | 5.1 |
| $\Delta_{Ref.2}$ | | | -37% | *+37%* | *+4%* |
| Biegezugfestigkeit | | | | | |
| nach 1 d [N/mm$^2$] | 4.2 | 4.9 | 5.3 | 5.1 | 5.5 |
| $\Delta_{Ref.2}$ | | | *+8%* | *+4%* | *+12%* |
| nach 7 d [N/mm$^2$] | 6.8 | 8.1 | 8.4 | 8.2 | 8.5 |

(fortgesetzt)

| | ***Ref.1*** | ***Ref.2*** | ***Ref.3*** | ***1*** | ***2*** |
|---|---|---|---|---|---|
| *Δ$_{Ref.2}$* | | | *+4%* | *+1%* | *+5%* |
| nach 28 d [N/mm$^2$] | 6.6 | 9.5 | 9.6 | 10.1 | 9.5 |
| *Δ$_{Ref.2}$* | | | *+1%* | *+6%* | *+0%* |
| Druckfestigkeit | | | | | |
| nach 1 d [N/mm$^2$] | 15.4 | 20.5 | 24.9 | 22.6 | 27.1 |
| *Δ$_{Ref.2}$* | | | *+21%* | *+10%* | *+32%* |
| nach 7 d [N/mm$^2$] | 36.3 | 41.5 | 54.8 | 39.1 | 50.6 |
| *Δ$_{Ref.2}$* | | | *+32%* | *-6%* | *+22%* |
| nach 28 d [N/mm$^2$] | 41.5 | 46.9 | 51.1 | 45.2 | 57.6 |
| *Δ$_{Ref.2}$* | | | *+9%* | *-4%* | *+23%* |
| | | | | | |
| Wasser-Absorptions-Koeffizient [g/m$^2$·h$^{0.5}$] | 1066 | 113 | 512 | 69 | 106 |
| *Δ$_{Ref.2}$* | | | *+353%* | *-39%* | *-6%* |

Die Ergebnisse aus Tabelle 3 zeigen, dass zwar der Zusatz von bereits bekannten Polymerdispersionen (***Ref.2***) gegenüber den entsprechenden Zusammensetzungen ohne Polymerdispersionen (***Ref.1***) eine starke Erhöhung der mechanischen Festigkeiten bzw. Reduktion der Porosität (charakterisiert durch den Wasserabsorptions-Koeffizient erreicht werden kann, dass aber dieser Effekt durch die wässrigen erfindungsgemässen Polymerdispersionen **(1, 2)** noch massiv verstärkt wird. Der Vergleich der Beispiele ***2*** mit ***1*** bzw. ***Ref.2*** zeigt, dass es möglich ist, trotz Reduktion der wässrigen Polymerdispersion um rund 33% immer noch höhere mechanische Eigenschaften, bzw. reduzierte Wasserabsorption, wie bei der Verwendung der entsprechenden nicht-erfindungsgemässen Polymerdispersion zu erreichen. Es zeigt sich zudem aus den Ergebnissen der Tabelle 3, dass die Verbesserung der mechanischen Eigenschaften insbesondere bei den Messungen nach kurzen Aushärtezeiten (nach 7 d, insbesondere nach 1 d, bei Biegezugfestigkeit und Druckfestigkeit, bzw. nach 14 Tagen bei Haftzugfestigkeit) besonders markant ausfallen.

Aus dem Vergleich von Vergleichsbeispiel ***Ref. 3*** mit Beispiel ***2*** ist ersichtlich, dass der alleinige Einsatz vom Kammpolymer (d.h. nicht in Form einer wässrigen Polymerdispersion) bei gleicher Menge zu einer starken Erhöhung der Wasserabsorption und starker Reduktion der Haftzugfestigkeit führt.

Vom Beispiel ***2*** und den Vergleichsbeispielen ***Ref.4, Ref.5***, ***Ref.6, Ref.4', Ref.5'*** und ***Ref.6'*** wurde das Ausbreitmass nach 0 Min. ("$ABM_0$"), 30 Min. ("$ABM_{30}$"), 60 Min. ("$ABM_{60}$") und 90 Min. ("$ABM_{90}$") gemäss EN 1015-3 sowie den Luftgehalt nach 0 Min. gemäss EN 196-1 bestimmt und in Tabelle 4 aufgeführt.

Tabelle 4. Verarbeitungseigenschaften der Mörtelzusammensetzungen. S = steif d.h. Ausbreitmass ist nicht mehr messbar.

| | ***2*** | ***Ref.4*** | ***Ref.5*** | ***Ref.6*** | ***Ref.4'*** | ***Ref.5'*** | ***Ref.6'*** |
|---|---|---|---|---|---|---|---|
| $ABM_0$ [mm] | 194 | 137 | 138 | 137 | 137 | 139 | 148 |
| $ABM_{30}$[mm] | 170 | 132 | 129 | 130 | 130 | 130 | 134 |
| $ABM_{60}$[mm] | 156 | S | S | S | S | S | S |
| $ABM_{90}$[mm] | 146 | S | S | S | S | S | S |
| Luftgehalt [%] | 3.5 | 4.0 | 4.1 | 4.5 | 4.5 | 4.2 | 4.2 |

Aus Tabelle 4 ist ersichtlich, dass das Kammpolymer als Bestandteil in den erfindungsgemässen wässrigen Polymerdispersionen wesentliche Vorteile in Bezug auf die Verarbeitbarkeit zur Folge hat. Im Vergleich zu den entsprechenden Polymerdispersionen, welche Sulfonsäure-Melamin-Formaldehyd-Kondens at (***Ref.4***), Naphthalinsulfonsäure-Formaldehyd-Kondensat **(*Ref.5*)**, oder Natrium-Ligninsulfonat **(*Ref.6*)**, anstelle eines Kammpolymers **KP** in derselben Menge aufweisen, weist das erfindungsgemässe Beispiel **2** bei identischem Wasser/Zement-Verhältnis ein bedeutend

höheres Ausbreitmass sowie einen sehr stark verminderten Luftgehalt auf. Selbst bei Verdoppelung des Anteils des Verflüssigers (***Ref.4'*** (Sulfonsäure-Melamin-Formaldehyd-Kondensat enthaltend), ***Ref.5'*** (Naphthalinsulfonsäure-Formaldehyd-Kondensat enthaltend) und ***Ref.6'*** (Natrium-Ligninsulfonat enthaltend)) wird die schlechte Verarbeitbarkeit nur unwesentlich verbessert und der Luftgehalt nur unwesentlich verringert. Bei allen Vergleichsbeispielen konnte das Ausbreitmass nach 60 Minuten oder nach 90 Minuten gar nicht mehr gemessen werden, da die Zusammensetzungen zu diesem Zeitpunkt bereits angesteift waren. Die vom erfindungsgemässen Beispiel ***2*** gemessenen Ausbreitmasse hingegen zeugen für eine äusserst gute Verarbeitung.

## Patentansprüche

**1.** Wässrige Polymerdispersion enthaltend

a) mindestens ein dispergiertes Copolymer **CP,** welches aufgebaut ist aus mindestens zwei Monomeren, welche ausgewählt sind aus der Gruppe bestehend aus Ethylen, Propylen, Butylen, Isopren, Butadien, Styrol, Acrylonitril, Acrylsäure, Methacrylsäure, Acrylsäurealkylester, Methacrylsäurealkylester, Vinylester und Vinylchlorid; und weiterhin
b) mindestens ein Kammpolymer **KP** mit über Ester- oder Ethergruppen an die Hauptkette angebundenen Seitenketten;

sowie

c) Wasser.

**2.** Wässrige Polymerdispersion gemäss Anspruch 1, **dadurch gekennzeichnet, dass** das Kammpolymer **KP** ein Copolymer von Vinylether oder Allylether mit Maleinsäureanhydrid und/oder Maleinsäure und/oder (Meth)acrylsäure.

**3.** Wässrige Polymerdispersion gemäss Anspruch 1, **dadurch gekennzeichnet, dass** das Kammpolymer **KP** ein Copolymer der Formel (I) ist

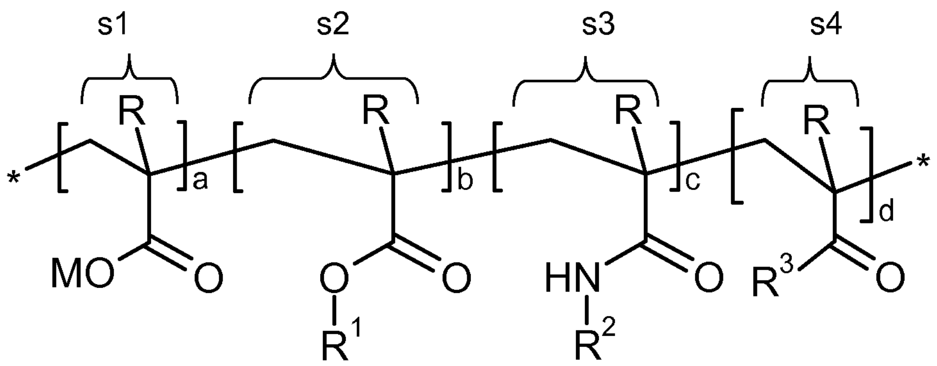

(I)

wobei

M unabhängig voneinander für $H^+$, Alkalimetallion, Erdalkalimetallion, zwei- oder dreiwertiges Metallion, Ammoniumion oder organische Ammoniumgruppe steht;
R je unabhängig voneinander von den anderen Resten R in Formel (I) für Wasserstoff oder für eine Methylgruppe steht;
$R^1$ unabhängig voneinander für $-[AO]_q-R^4$ steht;
$R^2$ unabhängig voneinander für eine $C_1$- bis $C_{20}$-Alkylgruppe, -Cycloalkylgruppe, -Alkylarylgruppe oder für $-[AO]_q-R^4$ steht, wobei A für eine $C_2$- bis $C_4$-Alkylengruppe und $R^4$ für eine $C_1$- bis $C_{20}$-Alkylgruppe, -Cyclohexylgruppe oder -Alkylarylgruppe steht; und q = 2 - 250;
$R^3$ unabhängig voneinander für $-NH_2$, $-NR^5R^6$ oder $-OR^7NR^8R^9$ steht,

wobei $R^5$ und $R^6$ unabhängig voneinander
für eine $C_1$- bis $C_{20}$-Alkylgruppe, -Cycloalkylgruppe oder -Alkylarylgruppe oder -Arylgruppe steht;
oder

für eine Hydroxyalkylgruppe steht,
oder für eine Acetoxyethyl- ($CH_3$-CO-O-$CH_2$-$CH_2$-) oder eine Hydroxy-isopropyl- (HO-CH($CH_3$)-$CH_2$-) oder eine Acetoxyisopropylgruppe ($CH_3$-CO-O-CH($CH_3$)-$CH_2$-) steht,
oder $R^5$ und $R^6$ zusammen einen Ring bilden, von dem der Stickstoff ein Teil ist, um einen Morpholin- oder Imidazolinring aufbauen;
wobei $R^7$ für eine $C_2$-$C_4$- Alkylengruppe steht;
und $R^8$ und $R^9$ je unabhängig voneinander für eine $C_1$- bis $C_{20}$-Alkylgruppe, -Cycloalkylgruppe, -Alkylarylgruppe, -Arylgruppe oder für eine Hydroxyalkylgruppe steht

und wobei a, b, c und d Molverhältnisse der Struktureinheiten s1, s2, s3 und s4 darstellen
und a/b/c/d = (0.1 - 0.9) / (0.1 - 0.9) / (0 - 0.8) / (0 - 0.3) mit der Massgabe, dass a + b + c + d = 1 ist.

4. Wässrige Polymerdispersion gemäss einem der vorhergehenden Ansprüche, **dadurch gekennzeichnet, dass** die wässrige Polymerdispersion weiterhin

d) mindestens ein Dispergierhilfsmittel **DHM,** vorzugsweise Poly(meth)-acrylsäure,

enthält.

5. Wässrige Polymerdispersion gemäss einem der vorhergehenden Ansprüche, **dadurch gekennzeichnet, dass**, dass die wässrige Polymerdispersion weiterhin

e) mindestens einen einwertigen oder mehrwertigen Alkohol oder einen Glykolether oder ein Harnstoff oder Amid der Formel (V) als Viskositätsregler **VR** enthält,

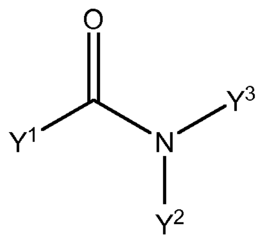

(V)

wobei

$Y^1$ für $NH_2$ oder für eine verzweigte oder unverzweigte Alkylgruppe mit 1 bis 6 C-Atomen steht, oder zusammen mit $Y^2$ für einen zweiwertigen Rest steht, welcher zusammen mit der Amidgruppe einen 5- bis 8-gliedrigen Ring bildet;
$Y^2$ für H oder für eine verzweigte oder unverzweigte Alkylgruppe mit 1 bis 6 C-Atomen, insbesondere für eine Methylgruppe, steht oder zusammen mit $Y^1$ für einen zweiwertigen Rest steht, welcher zusammen mit der Amidgruppe einen 5- bis 8-gliedrigen Ring bildet;
$Y^3$ für H oder für eine verzweigte oder unverzweigte Alkylgruppe mit 1 bis 6 C-Atomen, insbesondere für eine Methylgruppe, steht.

6. Wässrige Polymerdispersion gemäss einem der vorhergehenden Ansprüche, **dadurch gekennzeichnet, dass** die Polymerdispersion weiterhin g) mindestens ein pyrogenes oder kolloidales Siliziumdioxid enthält.

7. Wässrige Polymerdispersion gemäss einem der vorhergehenden Ansprüche, **dadurch gekennzeichnet, dass** die wässrige Polymerdispersion weiterhin

h) mindestens eine Phosphoratom-enthaltende Verbindung **PEV** enthält, welche vorzugsweise ein Orthophosphorsäure, Pyrophosphorsäure, Polyphosphorsäure oder ein sauer reagierendes Salz der Orthophosphorsäure, Pyrophosphorsäure oder Polyphosphorsäure ist.

8. Wässrige Polymerdispersion gemäss einem der vorhergehenden Ansprüche, **dadurch gekennzeichnet, dass** die wässrige Polymerdispersion weiterhin

i) mindestens eine Polyhydroxylverbindung oder ein Phosphat enthält.

**9.** Wässrige Polymerdispersion gemäss einem der vorhergehenden Ansprüche, **dadurch gekennzeichnet, dass** die wässrige Polymerdispersion weiterhin

j) mindestens ein Calciumsulfat oder ein amorphes Aluminiumhydroxid enthält.

**10.** Wässrige Polymerdispersion gemäss einem der vorhergehenden Ansprüche, **dadurch gekennzeichnet, dass** die wässrige Polymerdispersion die folgenden Bestandteile enthält oder daraus besteht:

10 - 60 Gew.-%, insbesondere 25 - 45 Gew.-%, dispergiertes Copolymer **CP**;
1 - 20 Gew.-%, insbesondere 5 - 15 Gew.-%, Kammpolymer **KP**;
20 - 80 Gew.-%, insbesondere 30 - 70 Gew.-%, Wasser;
0 - 5 Gew.-% , insbesondere 0.1 - 3 Gew.-%, Dispergierhilfsmittel **DHM,** vorzugsweise Poly(meth)acrylsäure;
0 - 15 Gew.-% , insbesondere 1 - 10 Gew.-%, Viskositätsregler **VR;**
0 - 50 Gew.-% , insbesondere 10 - 30 Gew.-%, pyrogenes oder kolloidales Siliziumdioxid;
0 - 30 Gew.-%, insbesondere 2 - 10 Gew.-%, Phosphoratomenthaltende Verbindung **PEV;**
0 - 15 Gew.-%, insbesondere 3 - 10 Gew.-%, Calciumsulfat oder amorphes Aluminiumhydroxid;

wobei die Gewichts-%-Angaben auf das Gewicht der wässrigen Polymerdispersion bezogen sind.

**11.** Mehrkomponentige Zusammensetzung, welche aus mindestens einer ersten Komponente **K1** und einer zweiten Komponente **K2** besteht, wobei
die erste Komponente **K1** eine wässrige Polymerdispersion gemäss einem der Ansprüche 1 bis 10 enthält; und
die zweite Komponente **K2** ein hydraulisches oder latent hydraulisches Bindemittel enthält.

**12.** Mehrkomponentige Zusammensetzung gemäss Anspruch 11, **dadurch gekennzeichnet, dass** das hydraulische oder latent hydraulische Bindemittel ein Zement, insbesondere ein Portlandzement, Weisszement, Tonerdeschmelzzement; oder ein Mischzement, insbesondere ein Mischung eines Zements mit Flugasche oder mit Schlacke oder mit Puzzolan, ist.

**13.** Ausgehärtete Zusammensetzung, welche nach dem Mischen einer mehrkomponentigen Zusammensetzung gemäss Anspruch 11 oder 12 erhalten wurde.

**14.** Bauwerk des Tiefbaues oder Hochbaues, welches eine ausgehärtete Zusammensetzung gemäss Anspruch 13 enthält.

**15.** Verwendung einer wässrigen Polymerdispersion gemäss einem der Ansprüche 1 bis 10 als Zusatzmittel für ein Haftschlämme oder einen Mörtel oder einen Beton.

## Claims

**1.** An aqueous polymer dispersion comprising

a) at least one dispersed copolymer **CP,** which is composed of at least two monomers selected from the group consisting of ethylene, propylene, butylene, isoprene, butadiene, styrene, acrylonitrile, acrylic acid, methacrylic acid, alkyl acrylate, alkyl methacrylate, vinyl acetate and vinyl chloride; and wherein
b) at least one comb polymer **KP** having side chains that are bound to the main chain by ester or ether groups;

and

c) water.

**2.** An aqueous polymer dispersion according to claim 1, **characterized in that** the comb polymer **KP** is a copolymer of vinyl ether or allyl ether and maleic anhydride and/or maleic acid and/or (meth)acrylic acid.

**3.** An aqueous polymer dispersion according to claim 1, **characterized in that** the comb polymer **KP** is a copolymer

of formula (I)

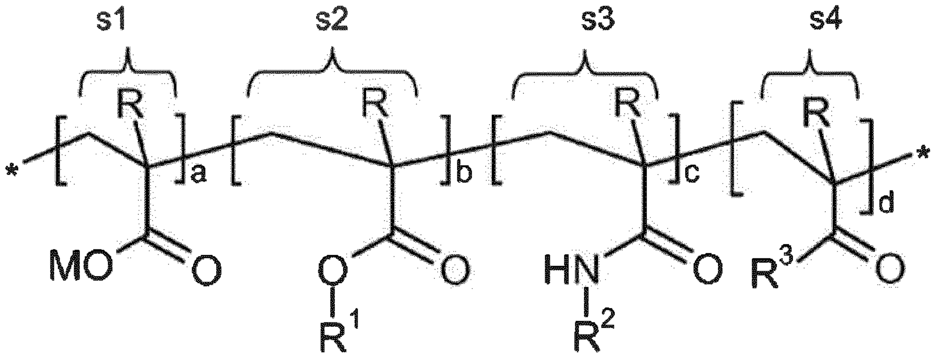

(I)

wherein

M is independently $H^+$, alkali metal ion, alkaline earth metal ion, divalent or trivalent metal ion, ammonium ion or organic ammonium group;
R is, each independently of the other residues R in formula (I), hydrogen or a methyl group;
$R^1$ is independently - $[AO]_q$-$R^4$;
$R^2$ is independently a $C_1$- to $C_{20}$-alkyl group, -cycloalkyl group, -alkylaryl group or -$[AO]_q$-$R^4$,

wherein A is a $C_2$- to $C_4$-alkylene group and $R^4$ is a $C_1$- to $C_{20}$-alkyl group, -cyclohexyl group or alkylaryl group; and q = 2 - 250;

$R^3$ is independently -$NH_2$,-$NR^5R^6$ or-$OR^7NR^8R^9$,

wherein $R^5$ and $R^6$ are each independently a $C_1$- to $C_{20}$-alkyl group, -cycloalkyl group or -alkylaryl group or -aryl group;
or
is a hydroxyalkyl group,
or is an acetoxyethyl ($CH_3$-CO-O-$CH_2$-$CH_2$-) or a hydroxyisopropyl (HO-CH($CH_3$)-$CH_2$-) or an acetoxyisopropyl group ($CH_3$-CO-O-CH($CH_3$)-$CH_2$-),
or $R^5$ and $R^6$ together form a ring, of which nitrogen is a part, to build a morpholine or imidazoline ring;
wherein $R^7$ is a $C_2$-$C_4$ alkylene group;
and $R^8$ and $R^9$ are each independently a $C_1$- to $C_{20}$-alkyl group,-cycloalkyl group, -alkylaryl group, -aryl group or a hydroxyalkyl group

and wherein a, b, c and d are the molar ratios of the structural units s1, s2, s3 and s4
and a/b/c/d = (0.1 - 0.9)/(0.1 - 0.9)/(0 - 0.8)/(0 - 0.3) provided that a + b + c + d = 1.

4. An aqueous polymer dispersion according to any one of the preceding claims, **characterized in that** the aqueous polymer dispersion further comprises

d) at least one dispersing agent **DHM,** preferably poly(meth)acrylic acid.

5. An aqueous polymer dispersion according to any one of the preceding claims, **characterized in that** the aqueous polymer dispersion further comprises

e) at least one monovalent or multivalent alcohol or a glycol ether or a urea or amide of formula (V) as a viscosity-regulating agent **VR,**

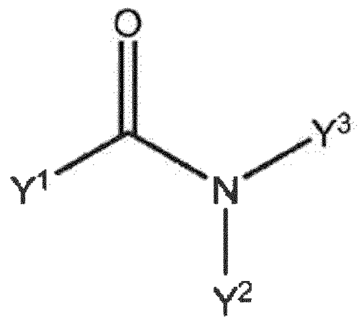

(V)

wherein

$Y^1$ is $NH_2$ or a branched or unbranched alkyl group having 1 to 6 carbon atoms, or together with $Y^2$ is a divalent residue which, together with the amide group, forms a 5-to 8-membered ring;
$Y^2$ is H or a branched or unbranched alkyl group having 1 to 6 carbon atoms, particularly a methyl group, or together with $Y^1$ is a divalent residue which, together with the amide group, forms a 5- to 8-membered ring;
$Y^3$ is H or a branched or unbranched alkyl group having 1 to 6 carbon atoms, particularly a methyl group.

**6.** An aqueous polymer dispersion according to any one of the preceding claims, **characterized in that** the aqueous polymer dispersion further comprises

g) at least one pyrogenic or colloidal silica.

**7.** An aqueous polymer dispersion according to any one of the preceding claims, **characterized in that** the aqueous polymer dispersion further comprises

h) at least one phosphorus atom-containing compound **PEV,** which is preferably an orthophosphoric acid, pyrophosphoric acid, polyphosphoric acid or an acidic salt of the orthophosphoric acid, pyrophosphoric acid or polyphosphoric acid.

**8.** An aqueous polymer dispersion according to any one of the preceding claims, **characterized in that** the aqueous polymer dispersion further comprises

i) at least one polyhydroxy compound or a phosphate.

**9.** An aqueous polymer dispersion according to any one of the preceding claims, **characterized in that** the aqueous polymer dispersion further comprises

j) at least a calcium sulfate or an amorphous aluminum hydroxide.

**10.** An aqueous polymer dispersion according to any one of the preceding claims, **characterized in that** the aqueous polymer dispersion comprises or consists of the following components:

10% -60% by weight, particularly 25% - 45% by weight of dispersed copolymer **CP;**
1% - 20% by weight, particularly 5% - 15% by weight of comb polymer **KP;**
20% - 80% by weight, particularly 30% - 70% by weight of water;
0% - 5% by weight, particularly 0.1% - 3% by weight of dispersing agent **DHM,** preferably poly(meth)acrylic acid;
0% - 15% by weight, particularly 1% - 10% by weight viscosity-regulating agent **VR;**
0% - 50% by weight, particularly 10% -30% by weight of pyrogenic or colloidal silica;
0% - 30% by weight, particularly 2% - 10% by weight of phosphorus-containing compound **PEV;**
0% -15% by weight, particularly 3% - 10% by weight of calcium sulfate or amorphous aluminum hydroxide;

wherein the %-by-weight values are based on the weight of the aqueous polymer dispersion.

**11.** A multi-component composition comprising at least a first component **K1** and a second component **K2,** wherein

the first component **K1** comprises an aqueous polymer dispersion according to any one of claims 1 to 10; and the second component **K2** comprises a hydraulic or latently hydraulic binding agent.

**12.** Multi-component composition according to claim 11, **characterized in that** the hydraulic or latently hydraulic binding agent is a cement, particularly a Portland cement, white cement, calcium aluminate cement or a blended cement, in particular a mixture of cement and fly ash or slag or pozzolan.

**13.** A cured composition which was obtained after mixing a multi-component composition according to claim 11 or 12.

**14.** A structure of civil engineering or building construction comprising a cured composition according to claim 13.

**15.** A use of an aqueous polymer dispersion according to one of claims 1 to 10 as an additive for bonding slurries or a mortar or a concrete.

## Revendications

**1.** Dispersion aqueuse de polymère, contenant

a) au moins un copolymère CP dispersé, qui est constitué par au moins deux monomères, qui sont choisis dans le groupe constitué par l'éthylène, le propylène, le butylène, l'isoprène, le butadiène, le styrène, l'acrylonitrile, l'acide acrylique, l'acide méthacrylique, les esters alkyliques de l'acide acrylique, les esters alkyliques de l'acide méthacrylique, les esters de vinyle et le chlorure de vinyle ; et en outre
b) au moins un polymère en peigne KP présentant des chaînes latérales liées à la chaîne principale via des groupes ester ou des groupes éther ; ainsi que
c) de l'eau.

**2.** Dispersion aqueuse de polymère selon la revendication 1, **caractérisée en ce que** le polymère en peigne KP est un copolymère de vinyléther ou d'allyléther avec de l'anhydride de l'acide maléique et/ou de l'acide maléique et/ou de l'acide (méth)acrylique.

**3.** Dispersion aqueuse de polymère selon la revendication 1, **caractérisée en ce que** le polymère en peigne KP est un copolymère de formule (I)

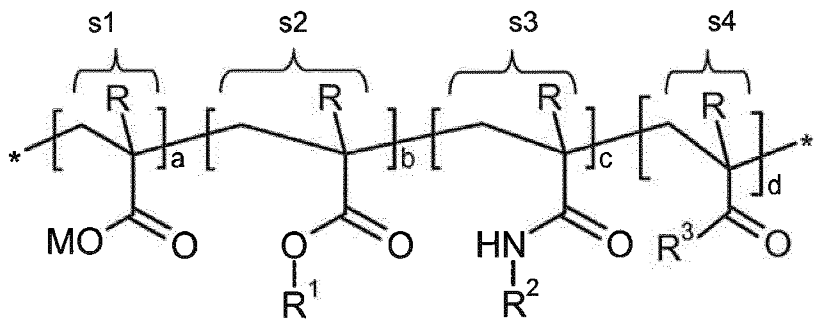
(I)

dans laquelle

M représente, indépendamment, H+' un ion de métal alcalin, un ion de métal alcalino-terreux, un ion métallique divalent ou trivalent, un ion d'ammonium ou un groupe d'ammonium organique ;
R représente, à chaque fois indépendamment des autres radicaux R dans la formule (I), hydrogène ou un groupe méthyle ;
$R^1$ représente, indépendamment, - $[AO]_q$-$R^4$ ;
$R^2$ représente, indépendamment, un groupe $C_1$-$C_{20}$-alkyle, un groupe $C_1$-$C_{20}$-cycloalkyle, un groupe $C_1$-$C_{20}$-alkylaryle ou - $[AO]_q$-$R^4$, A représentant un groupe $C_2$-$C_4$-alkylène et $R^4$ représentant un groupe $C_1$-$C_{20}$-alkyle, un groupe $C_1$-$C_{20}$-cyclohexyle ou un groupe $C_1$-$C_{20}$-alkylaryle ; et q = 2-250 ;
$R^3$ représente, indépendamment, $-NH_2$, $-NR^5R^6$ ou $-OR^7NR^8R^9$, où $R^5$ et $R^6$ représentent, indépendamment l'un de l'autre, un groupe $C_1$-$C_{20}$-alkyle, un groupe $C_1$-$C_{20}$-cycloalkyle ou un groupe $C_1$-$C_{20}$-alkylaryle ou un

groupe $C_1$-$C_{20}$-aryle ; ou
un groupe hydroxyalkyle ou
un groupe acétoxyéthyle ($CH_3$-CO-O-$CH_2$-$CH_2$-) ou hydroxyisopropyle (HO-CH($CH_3$)-$CH_2$-) ou acétoxyisopropyle ($CH_3$-CO-O-CH($CH_3$)-$CH_2$-) ou
$R^5$ et $R^6$ forment ensemble un cycle, dont l'azote fait partie, pour former un cycle morpholine ou imidazoline ;
$R^7$ représentant un groupe $C_2$-$C_4$-alkylène ;
et $R^8$ et $R^9$ représentant, à chaque fois indépendamment, un groupe $C_1$-$C_{20}$-alkyle, un groupe $C_1$-$C_{20}$-cycloalkyle, un groupe $C_1$-$C_{20}$-alkylaryle, un groupe $C_1$-$C_{20}$-aryle ou un groupe hydroxyalkyle
et a, b, c et d représentant les rapports molaires des unités structurales s1, s2, s3 et s4 et a/b/c/d = (0, 1-0, 9) / (0, 1-0, 9) / (0-0, 8) / (0-0, 3) à condition que a + b + c + d = 1.

4. Dispersion aqueuse de polymère selon l'une quelconque des revendications précédentes, **caractérisée en ce que** la dispersion aqueuse de polymère contient en outre

d) au moins un adjuvant de dispersion DHM, de préférence du poly(acide (méth)acrylique).

5. Dispersion aqueuse de polymère selon l'une quelconque des revendications précédentes, **caractérisée en ce que** la dispersion aqueuse de polymère contient en outre

e) au moins un alcool monovalent ou polyvalent ou un glycoléther ou une urée ou un amide de formule (V) comme régulateur de la viscosité VR,

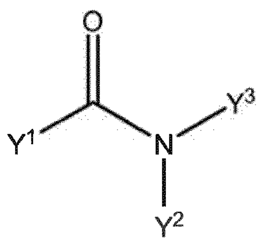

(V)

dans laquelle

$Y^1$ représente $NH_2$ ou un groupe alkyle ramifié ou non ramifié comprenant 1 à 6 atomes de carbone ou, ensemble avec $Y^2$, un radical divalent qui forme ensemble avec le groupe amide un cycle de 5 à 8 chaînons ;
$Y^2$ représente H ou un groupe alkyle ramifié ou non ramifié comprenant 1 à 6 atomes de carbone, en particulier un groupe méthyle, ou, ensemble avec $Y^1$, un radical divalent qui forme ensemble avec le groupe amide un cycle de 5 à 8 chaînons ;
$Y^3$ représente H ou un groupe alkyle ramifié ou non ramifié comprenant 1 à 6 atomes de carbone, en particulier un groupe méthyle.

6. Dispersion aqueuse de polymère selon l'une quelconque des revendications précédentes, **caractérisée en ce que** la dispersion polymère contient en outre g) au moins un dioxyde de silicium pyrogène ou colloïdal.

7. Dispersion aqueuse de polymère selon l'une quelconque des revendications précédentes, **caractérisée en ce que** la dispersion aqueuse de polymère contient en outre

h) au moins un composé contenant des atomes de phosphore PEV, qui est de préférence un acide orthophosphorique, un acide pyrophosphorique, un acide polyphosphorique ou un sel réagissant de manière acide de l'acide orthophosphorique, de l'acide pyrophosphorique ou de l'acide polyphosphorique.

8. Dispersion aqueuse de polymère selon l'une quelconque des revendications précédentes, **caractérisée en ce que** la dispersion aqueuse de polymère contient en outre

i) au moins un composé polyhydroxyle ou un phosphate.

9. Dispersion aqueuse de polymère selon l'une quelconque des revendications précédentes, **caractérisée en ce que** la dispersion aqueuse de polymère contient en outre

j) au moins un sulfate de calcium ou un hydroxyde d'aluminium amorphe.

**10.** Dispersion aqueuse de polymère selon l'une quelconque des revendications précédentes, **caractérisée en ce que** la dispersion aqueuse de polymère contient les constituants suivants ou est constituée par ceux-ci :

10-60% en poids, en particulier 25-45% en poids, de copolymère CP dispersé ;
1-20% en poids, en particulier 5-15% en poids, de polymère en peigne KP ;
20-80% en poids, en particulier 30-70% en poids, d'eau ;
0-5% en poids, en particulier 0,1-3% en poids, d'adjuvant de dispersion DHM, de préférence de poly(acide (méth)acrylique) ;
0-15% en poids, en particulier 1-10% en poids, de régulateur de la viscosité VR ;
0-50% en poids, en particulier 10-30% en poids, de dioxyde de silicium pyrogène ou colloïdal ;
0-30% en poids, en particulier 2-10% en poids, de composé contenant des atomes de phosphore PEV ;
0-15% en poids, en particulier 3-10% en poids, de sulfate de calcium ou d'hydroxyde d'aluminium amorphe ;

les indications en % en poids se rapportant au poids de la dispersion aqueuse de polymère.

**11.** Composition à composants multiples qui est constituée par un premier composant K1 et un deuxième composant K2 le premier composant K1 contenant une dispersion aqueuse de polymère selon l'une quelconque des revendications 1 à 10 ; et
le deuxième composant K2 contenant un liant hydraulique ou hydraulique latent.

**12.** Composition à composants multiples selon la revendication 11, **caractérisée en ce que** le liant hydraulique ou hydraulique latent est un ciment, en particulier un ciment Portland, un ciment blanc, un ciment alumineux ; ou un ciment mixte, en particulier un mélange d'un ciment avec des cendres volantes ou avec des scories ou avec de la pouzzolane.

**13.** Composition durcie qui a été obtenue après le mélange d'une composition à composants multiples selon la revendication 11 ou 12.

**14.** Ouvrage de génie civil qui contient une composition durcie selon la revendication 13.

**15.** Utilisation d'une dispersion aqueuse de polymères selon l'une quelconque des revendications 1 à 10 comme additif pour un badigeon ou un mortier ou un béton.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222932 A2
- US 2002007019 A
- EP 2006258 A
- WO 2006133933 A2
- EP 1138697 B1
- EP 1061089 B1
- EP 1348729 A1